# EUROPÄISCHE PATENTSCHRIFT

(11) **EP 2 710 777 B1**
(45) Veröffentlichungstag und Bekanntmachung des Hinweises auf die Patenterteilung: **07.06.2017**
(21) Anmeldenummer: 11785018.0
(22) Anmeldetag: 18.11.2011
(51) Int. Cl.: H04L 29/06, H04L 12/28, H04L 29/08

(54) **HEIMAUTOMATISIERUNGSSTEUERUNGSSYSTEM SOWIE VERFAHREN ZUM STEUERN EINER EINRICHTUNG EINES HEIMAUTOMATISIERUNGSSYSTEMS**
HOME AUTOMATION CONTROL SYSTEM AND METHOD FOR CONTROLLING A DEVICE IN A HOME AUTOMATION SYSTEM
SYSTÈME DE COMMANDE D'AUTOMATISATION DOMESTIQUE ET PROCÉDÉ DE COMMANDE D'UN DISPOSITIF D'UN SYSTÈME D'AUTOMATISATION DOMESTIQUE

(30) Priorität: 19.05.2011 DE 102011102038
(43) Veröffentlichungstag der Anmeldung: 26.03.2014
(73) Patentinhaber: innogy SE, 45128 Essen (DE)
(72) Erfinder: WELLNER, Holger, 48268 Greven (DE)
(74) Vertreter: Cohausz & Florack
(86) Internationale Anmeldenummer: PCT/EP2011/070464
(87) Internationale Veröffentlichungsnummer: WO 2012/155997

(56) Entgegenhaltungen:
- WO-A2-03/054683
- US-A1- 2011 032 423

## Beschreibung

Der Gegenstand betrifft ein Heimautomatisierungssteuerungssystem sowie ein Verfahren zum Steuern einer Einrichtung eines Heimautomatisierungssystems mittels Gesten.

Gestensteuerung ist in letzter Zeit in den Fokus der Entwicklung gelangt. Insbesondere durch die Massenverfügbarkeit von vorzugsweise optischen Erfassungssystem, wie beispielsweise Sony' s EyeToy® oder Sony' s Playstation Move® Kamera oder auch Microsoft' s Kinect® Kamera, ist die optische Erfassung eines Raumes und somit auch die Möglichkeit der Gestensteuerung preiswert verfügbar. Im Zusammenhang mit solchen Systemen sind bereits Verfahren entwickelt worden, um mittels Gesten beispielsweise Fernseher oder auch Heimautomatisierungssysteme zu steuern, wie beispielsweise aus der US 2011/0032423 A1 bekannt ist. Auch aus der US 2008/0062257 A1 ist eine Gestensteuerung bekannt, bei der zumindest zwei Kameras Nutzergesten erfassen. Die dort beschriebene Gestensteuerung bezieht sich auf Gesten in Relation zu einem Bildschirm, so dass für die Gestensteuerung stets ein Bildschirm notwendig ist.

Auch aus der US 2010/0208035 A1 ist eine Gestensteuerung bekannt. Bei dieser kann ein Nutzer frei im Raum eine Geste ausführen, die zu einer Reaktion, im gezeigten Fall zu einer Lautstärkeerhöhung einer Musikanlage führt.

Nachteilig bei den beschriebenen Systemen ist jedoch die Integration der Gestensteuerung in ein Heimautomatisierungssystem. Ein Heimautomatisierungssystem zeichnet sich durch die Wirkverbindung zwischen Sensoren und Aktoren aus. Nutzer können an Sensoren, wie beispielsweise Schaltern, Tasten, Drehreglern, Schiebereglern, Dimmern, Temperaturreglern oder dergleichen Aktionen auslösen, die dann an den den Sensoren zugeordneten Aktoren ausgeführt werden. So kann beispielsweise durch Betätigung eines Schalters oder einer Taste ein Aktor ein- und ausgeschaltet werden, was zum Ein- und Ausschalten einer Lampe führt. An einem Drehregler, Schieberegler oder Dimmer kann beispielsweise eine Pulsweitenmodulation eines Dimmaktors beeinflusst werden, sodass die an diesem Dimmaktor angeschlossene Lampe gedimmt werden kann. An einem Taster kann beispielsweise eine Jalousiensteuerung, Rolladensteuerung oder Markisensteuerung beeinflusst werden. An einem Temperaturregler kann beispielsweise über einen Taster oder einen Dreh- oder Schieberegler eine Soll-Temperatur eingestellt werden. Der Sensor instruiert den in der Heizungssteuerung verbauten Aktor darauf hin, die Heizung so zu steuern, dass möglichst der Temperatur Soll-Wert erreicht wird, wozu die Ventilstellung an der Heizung durch den Aktor variiert wird.

Somit sind freie Gesten im Raum für die Steuerung einer Heimautomatisierung in der Regel nicht geeignet, da diesen freien Gesten ein Bezug zu einem bestimmten Sensor fehlt. Ferner sind Gesten in Relation zu einem Display ebenfalls nicht geeignet, eine Heimautomatisierung zu vereinfachen, da in diesem Fall stets das Display verfügbar sein muss. Insbesondere bei der Heimautomatisierung, bei der die Automatisierung in möglichst vielen Räumen stattfinden soll, wäre dies hinderlich, da das Display durch den Nutzer immer mitgeführt werden müsste.

Die US 2011/0032423 A1 beschreibt ein Verfahren zum Steuern eines Systems zur Heimautomatisierung mittels eines Fernsehgerätes.

Die WO 03/054683 A2 zeigt die Steuerung eines mobilen Gerätes mittels Gesten. Hierfür projiziert das mobile Gerät eine virtuelle Tastatur auf eine Fläche und der Nutzer kann durch Berühren der Fläche die Tastatur bedienen.

Dem Gegenstand lag die Aufgabe zugrunde, eine Heimautomatisierung möglichst komfortabel zu gestalten, wobei der Grad an Flexibilität der Automatisierungssteuerung hoch gehalten werden soll.

Diese Aufgabe wird durch ein System nach Anspruch 1 sowie ein Verfahren nach Anspruch 8 gelöst.

Gegenständlich ist zumindest ein Erfassungsmittel eingerichtet zum Erfassen von Gesten in einem Raum vorgesehen.

Das Erfassungsmittel dient somit zum vorzugsweise optischen Erfassen von Gesten in einem Raum. Sobald ein Nutzer sich in einem Raum befindet, wird dieser durch das Erfassungsmittel erfasst und abgetastet.

Gesten im Sinne des Gegenstandes können Bewegungen des Nutzers oder der Gliedmaßen des Nutzers, die einem zuvor einstudierten oder vorgegebenen Muster folgen, sein. So kann eine Geste beispielsweise ein Zeigen auf einen bestimmten Punkt sein. Auch kann eine Geste eine Auf- und Abbewegung oder eine Seitwärtsbewegung einer Hand sein. Auch kann eine Geste eine kreisende Bewegung einer Hand sein. Schließlich kann eine Geste auch eine Bewegung des ganzen Körpers des Nutzers, beispielsweise das Ausstrecken von beiden Armen oder das Heben eines Armes oder dergleichen sein. Die Anzahl der verschiedenen Gesten ist durch die Auflösung des Erfassungsmittels begrenzt. Je höher die Auflösung des Erfassungsmittels, das heißt je feiner die Erfassungsmittel den Nutzer und den Raum erfassen können, desto mehr unterschiedliche Gesten sind möglich, da die Erfassungsmittel mit höherer Auflösung auch kleinere Bewegungsunterschiede erkennen können.

Gegenständlich ist vorgeschlagen, dass ein Speichermittel vorgesehen ist. Mittels des Speichermittels ist es möglich, Informationen zu einem virtuellen Sensor in einem Raum zu speichern.

Ein virtueller Sensor im Sinne des Gegenstandes ist eine virtuelle Repräsentanz eines zuvor beschriebenen Sensors, beispielsweise eines Tasters, eines Schalters, eines Dreh- oder Schiebereglers, eines Dimmers, eines Temperaturreglers oder dergleichen. Ein virtueller Sensor kann als datentechnische Repräsentanz eines tatsächlichen Sensors verstanden werden.

Gegenständlich wird vorgeschlagen, den Sensor in, an oder auf einer Raumbegrenzungsfläche virtuell anzuordnen. Eine Raumbegrenzungsfläche kann eine Decke oder eine Wand sein. Auch kann eine Raumbegrenzungsfläche eine Innenseite oder eine Außenseite einer Wand sein. So kann z.B. eine Außenwand eines Hauses auch als Raumbegrenzungsfläche verstanden werden. Somit sind Gartenanwendungen für den virtuellen Sensor ebenfalls möglich, wobei der virtuelle Sensor dabei beispielsweise an eine Außenwand eines Hauses angeordnet sein kann.

Der virtuelle Sensor kann gegenständlich einer Raumbegrenzungsfläche oder Wand zugeordnet werden. Vorzugsweise wird der virtuelle Sensor einer bestimmten Position auf der Raumbegrenzungsfläche zugeordnet. Somit ist es möglich, auf den Raumbegrenzungsflächen, unabhängig von einer tatsächlichen verkabelten oder kabellosen Installation, virtuelle Sensoren vorzusehen. Diese virtuellen Sensoren können beliebig im Raum platziert werden.

Um den virtuellen Sensor anzusprechen, wird vorgeschlagen, eine den Sensor ansprechende Geste dem Sensor zuzuordnen. Das heißt, dass eine den Sensor ansprechende Geste beispielsweise ein Zeigen mit dem Finger auf den virtuellen Sensor sein kann. Auch kann eine den Sensor ansprechende Geste ein Berühren der Raumbegrenzungsfläche im Bereich der Fläche, auf welcher der virtuelle Sensor angeordnet ist, sein. Auch kann ein Wischen, Drehen oder eine sonstige Handbewegung im Bereich des virtuellen Sensors an oder auf der Raumbegrenzungsfläche eine solche den Sensor ansprechende Geste sein. Eine den Sensor ansprechende Geste unterscheidet sich von einer freien Geste im Raum dadurch, dass die den Sensor ansprechende Geste in Relation zu dem Sensor durchgeführt werden muss. Vorzugsweise ist eine solche Geste nur in einer räumlichen Nähe, beispielsweise in einem maximalen Abstand von 50cm, 10cm oder auch weniger vom Sensor durchzuführen, um als den Sensor ansprechend erkannt zu werden.

Neben dem Speichern einer Zuordnung zwischen dem virtuellen Sensor und einer den Sensor ansprechenden Geste wird eine Zuordnung zwischen dem virtuellen Sensor und einem Aktor gespeichert. Das heißt, dass jedem virtuellen Sensor zumindest ein realer Aktor zugeordnet werden kann, der mittels des virtuellen Sensors gesteuert werden kann. Beispielsweise kann ein realer Aktor ein Schaltaktor sein, mit dem Schaltzustände, beispielsweise Ein und Aus einer Stromversorgung, gesteuert werden können. Ist der virtuelle Sensor ein Schalter oder Taster, kann durch das Aktivieren des Sensors der Schaltzustand des zugeordneten Schaltaktors verändert werden.

Auch kann der Aktor ein Heizungsaktor sein, der beispielsweise eine Ventilstellung eines Heißkörperventils beeinflusst. In diesem Fall kann der Sensor beispielsweise eine virtuelle Temperatursteuerung sein. Beispielsweise das Auf- oder Abbewegen der Hand in unmittelbarer Nähe zum einem solchem Sensor und diesem Sensor zugewandt kann zum Erhöhen oder Absenken der Soll-Temperatur führen.

Schließlich sind Steuerungsmittel vorgesehen, zum Ansteuern des Aktors bei einer Detektion einer den Sensor ansprechenden Geste durch die Erfassungsmittel. Entsprechend der gespeicherten Zuordnung zwischen der den Sensor ansprechenden Geste und dem virtuellen Sensor kann anhand der Steuerungsmittel eine den Sensor ansprechende Geste erkannt werden. Daraufhin wird entsprechend der Zuordnung zwischen dem virtuellen Sensor und dem Aktor der entsprechende Aktor durch die Steuerungsmittel angesteuert.

Bei der Zuordnung zwischen virtuellem Sensor und Aktor kann eine Regel dazu hinterlegt werden, welche Geste an dem virtuellen Sensor zu welcher Aktion an dem zugeordneten Aktor führt. Somit ist es möglich, mittels eines virtuellen Sensors und einer dem Sensor zugeordneten Geste einen Aktor zu steuern. Weder eine Verkabelung noch eine sonstige Installation in dem Raum mit den zu steuernden Einrichtungen ist notwendig. Lediglich zumindest ein Erfassungsmittel ist in dem Raum notwendig, um festzustellen, dass eine einen Sensor ansprechende Geste ausgeführt wurde.

Wie eingangs bereits erläutert, ist die Art der möglichen Erfassungsmittel vielfältig. Als Erfassungsmittel können nicht nur Kameras, sondern beispielsweise auch ein Infrarotsensor, ein Schallsensor und/oder ein Temperatursensor dienen. So ist es beispielsweise möglich, mittels eines Infrarotsensors und eines Infrarotsenders ein Punktraster oder eine Gitternetzlinie in einen Raum zu projizieren. Je nach Verschiebung der Punkte oder der Gitternetzlinien zueinander kann dann mit einer Infrarotkamera eine zweidimensionale Abbildung des Raumes und des Nutzers erfasst werden. Hierdurch können Bewegungsabläufe erfasst werden. Sind mehr als ein Erfassungsmittel angeordnet, beispielsweise zwei, können Abdeckungsbereiche, die beispielsweise durch den Körper des Nutzers abgedeckt sind, ebenfalls erfasst und ausgeleuchtet werden, sodass eine bessere Gestenerkennung möglich ist.

Auch ist es möglich, dass mit zwei oder mehr Kameras ein dreidimensionales Abbild des zu erfassenden Raumes samt Inventar und Nutzern erstellt wird. Dann können komplexe Gesten erfasst werden. Außerdem kann mit einer geschickten Anordnung der Erfassungsmittel eine Abschattung von Bereichen vermieden werden, sodass die Gesten stets erkannt werden. Auch ist es möglich, dass ein Schallsensor, beispielsweise ein Ultraschallsensor oder ein Infraschallsensor Bewegungen erfasst und diese entsprechend umsetzt. Jedoch ist hier eine Unterscheidung zwischen dem Schallsensor, der als Erfassungsmittel dient, und dem virtuellen Sensor notwendig. Der Schallsensor erfasst die Geste, die den virtuellen Sensor anspricht. Auch ist ein Temperatursensor möglich, der eine den virtuellen Sensor ansprechende Geste erfasst.

Es wird vorgeschlagen, dass die Erfassungsmittel ein Abbild zumindest von Teilen des Raumes erfassen und dass Wiedergabemittel das erfasste Abbild des Raumes für einen Nutzer, vorzugsweise auf einem Bildschirm, wiedergeben. Der virtuelle Sensor kann in, an oder auf einer Raumbegrenzungsfläche angeordnet werden. Um dies zu tun, muss der Nutzer definieren, wo an der Raumbegrenzungsfläche der virtuelle Sensor anzuordnen ist. Um diese Zuordnung besonders einfach vornehmen zu können, wird vorgeschlagen, auf vorzugsweise einem Bildschirm das Abbild von zumindest Teilen des Raumes wiederzugeben. Dies kann eine grafische Wiedergabe des Abbildes des Raumes sein. Die Wiedergabe kann beispielsweise das von einer Kamera erfasste Bild sein. Auch ist es möglich, dass die Wiedergabe in abstrahierter Form erfolgt, so dass lediglich die Wände sowie z.B. der Boden und/oder die Decke des Raumes, aber auch Türen und/oder Fenster im Raum dargestellt werden. Mit Hilfe des wiedergegebenen Abbildes des Raumes kann ein Nutzer, beispielsweise unter Verwendung der Maus oder eines sonstigen Steuergerätes, virtuelle Sensoren auf den Raumbegrenzungsflächen des Raumes anordnen. Hierzu bewegt er einen Sensor in dem Abbild des Raumes an den Ort, an dem er den virtuellen Sensor platzieren möchte. Nach einer Bestätigung ist der Sensor virtuell an der entsprechenden Raumbegrenzungsfläche angeordnet.

Mit Hilfe von Programmiermitteln ist in dem wiedergegebenen Abbild des Raumes der virtuelle Sensor der Raumbegrenzungsfläche zuordenbar. Wie bereits erwähnt, kann mit Hilfe eines Eingabemittels, z.B. eines Touchscreens, auf dem Abbild des Raumes der virtuelle Sensor virtuell bewegt, einer Raumbegrenzungsfläche virtuell zugeordnet und dort platziert werden. Somit kann, ohne eine tatsächliche Installation vornehmen zu müssen, der Sensor an verschiedenen Stellen des Raumes angeordnet werden. Auch ist es möglich, den virtuellen Sensor in dem Abbild zu aktivieren. Somit ist zusätzlich zu der Geste eine Steuerung im Abbild des Raumes, beispielsweise durch einen Tastendruck, einen Fingerdruck oder einen Mauszeiger des Sensor möglich.

Abschließend ist es noch notwendig, den virtuellen Sensor mit einem Aktor zu verknüpfen und Regeln zu hinterlegen, nach denen der Aktor entsprechend den Gesten, die dem Sensor zugeordnet sind, agiert. Der leichteste Fall ist ein virtueller Sensor, der als Taster oder Schalter ausgestaltet ist. So kann beispielsweise ein Bewegen des Fingers in Richtung des Sensors oder ein Antippen der Raumbegrenzungsfläche an der Stelle des virtuellen Sensors eine Aktion an einem Schaltaktor auslösen, die ein Ein- und Ausschalten der durch den Aktor gesteuerten Energieversorgung einer Einrichtung, z.B. einer Lampe, bewirkt. Andere Verknüpfungen zwischen virtuellen Sensoren und Aktoren sind ebenfalls möglich.

Gemäß einem vorteilhaften Ausführungsbeispiel wird vorgeschlagen, dass die Raumbegrenzungsfläche eine Wand, ein Boden oder eine Decke des Raumes ist. Somit ist es möglich, in, an oder auf einer beliebigen Raumbegrenzungsfläche eines Raumes den virtuellen Sensor anzuordnen. Auch kann die Raumbegrenzungsfläche eine Außenwand eines Raumes sein, beispielsweise auch im Außenbereich. Auch kann ein Sensor unmittelbar an einer zu steuernden Einrichtung angeordnet werden. Beispielsweise ist es möglich, den virtuellen Sensor unmittelbar an einer Wandlampe oder einer Deckenlampe anzuordnen. Zeigt der Nutzer dann auf die jeweilige Einrichtung, zeigt er auch auf den entsprechenden virtuellen Sensor und dieses Zeigen auf den Sensor kann als eine den Sensor ansprechende Geste interpretiert werden. Wenn dann der entsprechende Sensor noch dem Aktor zugeordnet ist, der die entsprechende Einrichtung steuert, wie beispielsweise die Lampe, kann durch ein Zeigen auf eine Lampe die entsprechende Lampe angeschaltet werden. Somit muss der Sensor nicht zwingend einer Raumbegrenzungsfläche zugeordnet sein. Eine beschriebene Zuordnung zwischen Sensor und Einrichtung ist für sich genommen eigenständig erfinderisch und ist mit allen hier offenbarten Merkmalen kombinierbar.

Gemäß einem vorteilhaften Ausführungsbeispiel wird vorgeschlagen, dass die Erfassungsmittel und/oder der Aktor Kommunikationsmittel zur Kommunikation über einen Heimautomatisierungsbus aufweisen. Ein Heimautomatisierungsbus kann beispielsweise ein Funkbus sein. Auch ist es möglich, dass der Heimautomatisierungsbus ein drahtgebundener Bus ist. Auf dem Heimautomatisierungsbus können entsprechend eines Kommunikationsprotokolls Steuerungssignale zwischen Erfassungsmitteln, Aktoren und Sensoren ausgetauscht werden. Auch ist eine Kommunikation über eine zentrale Steuerung möglich. Die zentrale Steuerung kann als Teil des Heimautomatisierungsbusses mit diesem verbunden sein und mit den daran angeschlossenen Einrichtungen kommunizieren. Ferner kann die zentrale Steuerungseinrichtung über eine zweite Schnittstelle beispielsweise mit einem Weitverkehrsnetz, wie beispielsweise dem Internet, verbunden sein. Hierüber ist eine Kommunikation mit einem externen Server möglich.

Gemäß einem vorteilhaften Ausführungsbeispiel wird vorgeschlagen, dass ein erster lokaler, zentraler Server vorgesehen ist. Der erste lokale, zentrale Server kann die Steuerungseinrichtung sein, die als Teil des Heimautomatisierungsbusses die Kommunikation hierin steuert und die "Intelligenz" des Heimautomatisierungsbusses beinhaltet. Hierzu können gemäß einem vorteilhaften Ausführungsbeispiel zumindest die Speichermittel und/oder die Steuerungsmittel in dem zentralen Server angeordnet sein. Das heißt, dass die Speicherung der Zuordnungen als auch die Generierung von Signalen auf dem Heimautomatisierungsbus durch den lokalen, zentralen Server vorgenommen werden.

Auch wird vorgeschlagen, dass ein zweiter externer Server vorgesehen ist. Dies kann beispielsweise ein Internetserver sein, der entfernt von dem Heimautomatisierungssteuerungssystem über das Internet erreichbar angeordnet ist und vorzugsweise zumindest die Speichermittel aufweist. In diesem Fall kann dann die Zuordnung zwischen Sensoren und Aktoren als auch zwischen Sensoren und Raumbegrenzungsflächen extern von dem Heimautomatisierungssystem gespeichert werden.

Gemäß einem vorteilhaften Ausführungsbeispiel wird vorgeschlagen, dass ein Gehäuse oder ein Aufkleber als Platzhalter für den virtuellen Sensor vorgesehen ist, wobei das Gehäuse oder der Aufkleber an der Raumbegrenzungsfläche anbringbar ist und dort befestigt werden kann. Es ist erkannt worden, dass virtuelle Sensoren häufig in Vergessenheit geraten, da diese durch den Nutzer nicht unmittelbar visuell wahrnehmbar sind. Um zu verhindern, dass der Nutzer vergisst, wo er einen Sensor platziert hat, ist es möglich, ein Leergehäuse oder einen Aufkleber als Platzhalter für den Sensor an der Raumbegrenzungsfläche anzuordnen. Hierzu kann das z.B. Gehäuse beispielsweise rückseitig mit einem doppelseitigen Klebeband versehen sein und so einfach auf die Wand aufgeklebt werden. Das Gehäuse oder der Aufkleber selber ist funktionslos und dient lediglich als Gedankenstütze für den Nutzer, dass an der entsprechenden Stelle ein virtueller Sensor eingerichtet wurde. Auch kann ein vorhandener Schalter als Orientierungspunkt für einen virtuellen Sensor verwendet werden.

Gemäß einem vorteilhaften Ausführungsbeispiel wird vorgeschlagen, dass die Speichermittel eine Aktivierungsgeste speichern und dass erst nach einem Erfassen der Aktivierungsgeste die Steuerungsmittel aktiviert sind. Es ist erkannt worden, dass nicht jede Bewegung eine Geste ist und auch nicht jede Bewegung zu einer Interpretation als Geste führen darf. Wenn der Nutzer sich in einem Raum aufhält, kann es passieren, dass er eine Handbewegung durchführt, die einer einen virtuellen Sensor ansprechenden Geste entspricht. Um aber zu verhindern, dass dann die Steuerungsmittel den Aktor ggf. ungewünscht entsprechend ansteuern, wird vorgeschlagen, dass zunächst eine Aktivierung der Steuerungsmittel erfolgen muss. Dies kann durch eine Aktivierungsgeste erfolgen.

Beispielsweise kann die Aktivierungsgeste eine Geste sein, die ein Nutzer nicht ohne weiteres beim Aufenthalt in einem Raum durchführt, beispielsweise das Heben eines Arms oder das Heben beider Arme. Erst nachdem die Aktivierungsgeste durchgeführt wurde, kann eine einen Sensor ansprechende Geste zu einer Aktion durch die Steuerungsmittel führen.

Ein weiterer Aspekt ist ein Verfahren zum Steuern einer Einrichtung eines Heimautomatisierungssystems nach Anspruch 10.

Die zuvor genannten Verfahren können auch als Computerprogramm oder als auf einem Speichermedium gespeichertes Computerprogramm realisiert werden. Hierbei kann erfassungsmittelseitig, aktorseitig und/oder serverseitig ein Mikroprozessor zur Durchführung der jeweiligen Verfahrensschritte durch ein Computerprogramm geeignet programmiert sein.

Die Merkmale der Verfahren und Vorrichtungen sind frei miteinander kombinierbar. Insbesondere können Merkmale der Beschreibung und/oder der abhängigen Ansprüche, auch unter vollständiger oder teilweiser Umgehung von Merkmalen der unabhängigen Ansprüche, in Alleinstellung oder frei miteinander kombiniert eigenständig erfinderisch sein.

Nachfolgend wird der Gegenstand anhand einer ein Ausführungsbeispiel zeigenden Zeichnung näher erläutert. In der Zeichnung zeigen:
- Fig. 1: eine schematische Ansicht eines Raumes mit Erfassungsmitteln;
- Fig. 2: eine schematische Ansicht eines Heimautomatisierungssystems;
- Fig. 3a: eine Abbildung eines Raumes auf einem Bildschirm;
- Fig. 3b: eine Abbildung einer Programmierumgebung für virtuelle Sensoren und Aktoren;
- Fig. 4: die Abbildung des Raumes gemäß Fig. 1 mit einem Nutzer bei einer Aktivierungsgeste;
- Fig. 5: die Abbildung des Raumes gemäß Fig. 4 mit einem Nutzer mit einer einem Sensor zugeordneten Geste;
- Fig. 6: eine schematische Andeutung von Gesten, die einem Sensor zugeordnet sind;
- Fig. 7: der Aufbau eines Heimautomatisierungssystems mit verschiedenen Einrichtungen.

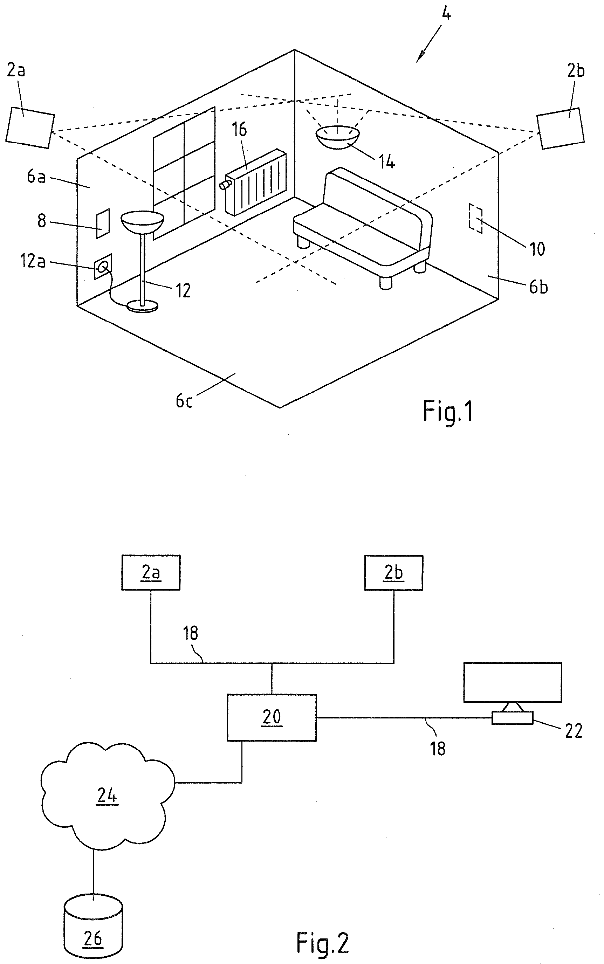

Figur 1 zeigt zwei Kameras 2a, 2b, die als Erfassungseinrichtungen einen Raum 4 erfassen. Die Kameras 2a, 2b können ganz herkömmliche Videokameras sein, mit deren Hilfe der Raum 4 erfasst werden kann. In den Kameras 2a, 2b können Mustererkennungsschaltungen vorhanden sein, mit denen Gesten erkannt werden können. Auch ist es möglich, dass die Kameras 2a, 2b die erfassten Bilder lediglich an einen lokalen Steuerrechner übermitteln und dort die Gesten detektiert werden.

Figur 1 zeigt weiter in dem Raum 4 drei Begrenzungsflächen, nämlich eine linke Wand 6a, eine Rückwand 6b sowie einen Boden 6c. Darüber hinaus ist ein Lichtschalter 8, der tatsächlich verdrahtet ist, an der linken Wand 6a dargestellt. Darüber hinaus ist mit gestrichelten Linien ein virtueller Schalter 10 an der Rückwand 6b angedeutet. Der virtuelle Schalter 10 befindet sich nicht tatsächlich auf oder an der Rückwand 6b, sondern ist dort lediglich definiert. Diese Definition ist in dem lokalen, zentralen Steuerrechner gespeichert, wie nachfolgend noch gezeigt werden wird.

Darüber hinaus ist in der Figur 1 zu erkennen, dass verschiedene Einrichtungen wie Stehlampen 12, Wandlampen 14 und Heizkörper 16 vorgesehen sind, die über den virtuellen Schalter 10 angesteuert werden könnten. Hierzu kann der jeweiligen Einrichtung 12-16 ein eigener Aktor zugeordnet sin. Bei der Stehlampe 12 kann der Aktor 12a beispielsweise in der Steckdose, in die die Lampe 12 eingesteckt ist, angeordnet sein und beispielsweise per Funk mit dem zentralen Steuerrechner kommunizieren. An der Wandlampe 14 kann beispielsweise unmittelbar kein Aktor angeordnet sein, sondern in einem Hausverteilschrank kann ein Aktor 14a mit der elektrischen Zuleitung zu der Lampe 14 verbunden sein. An dem Heizkörper 16 kann eine Ventilsteuerung als Heizungsaktor 16a angeordnet sein, der beispielsweise über Funk mit dem Heimautomatisierungsbus kommuniziert. Der Heizungsaktor 16a des Heizkörpers 16 eignet sich zur Ventilsteuerung des Ventils des Heizkörpers 16.

Somit ist der Raum 4 gemäß der Figur 1 mit verschiedenen Einrichtungen 12, 14, 16 bestückt, die jeweils mit einem Aktor 12a, 14a, 16a gesteuert werden können. An einer Wand 6 des Raumes 4 kann ein virtueller Sensor 10 angeordnet werden, und mittels Erfassungseinrichtungen 2 ist es möglich, Gesten in dem Raum 4 zu detektieren.

Der Aufbau eines Heimautomatisierungssystems mit einem Bus 18 ist in der Figur 2 dargestellt. Zu erkennen ist, dass der Bus 18 zum Einen an die Kameras 2a, 2b gekoppelt ist und die Kameras 2 mit der zentralen Steuereinrichtung 20 verbindet. Ferner verbindet der Bus 18 die zentrale Steuereinrichtung 20 mit einem Computer 22. Auch ist es möglich, dass der Computer 22 außerhalb des Heimnetzes, beispielsweise über das Internet 24 mit der zentralen Steuereinrichtung 20 verbunden ist.

Wie nachfolgend noch gezeigt werden wird, eignet sich der Computer 22 zur Zuordnung von virtuellen Sensoren 10 zu Wänden 6 eines Raumes 4 oder zu Einrichtungen 12-16 als auch zur Zuordnung der Sensoren 10 zu Aktoren 12a, 14a, 16a und zur Definition von über Sensoren 10 ausführbaren Aktionen.

In der Figur 2 ist zusätzlich ein externer Server 26 dargestellt, der über das Internet 24 mit der zentralen Steuereinrichtung 20 verbunden ist. In dem externen Server 26 können verschiedenste Daten gespeichert werden, wie beispielsweise Zuordnungen zwischen Sensoren 10 und Räumen 4 bzw. den Wänden 6 in den Räumen 4 als auch Zuordnungen zwischen Sensoren 10 und Aktoren 12a, 14a, 16a.

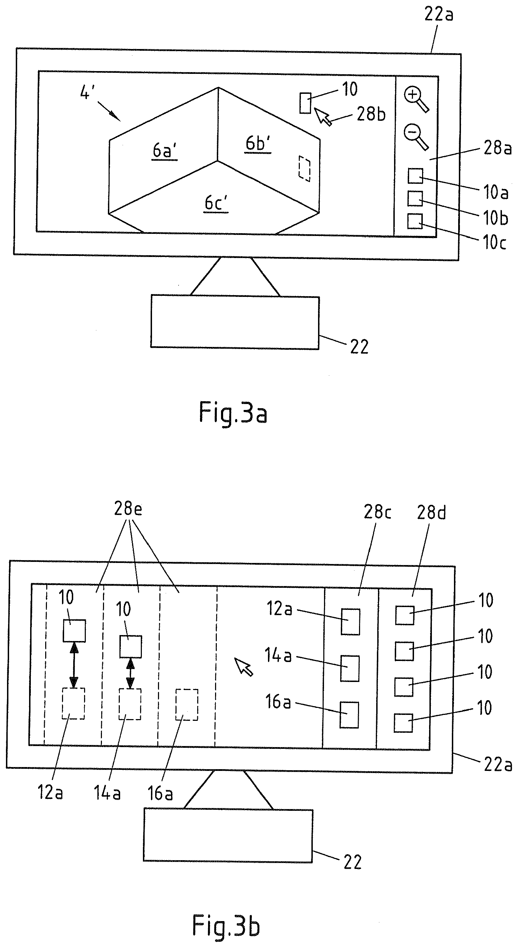

Zur Zuordnung eines Sensors 10 zu einer Wand 6 kann der Computer 22 genutzt werden, wie in Fig. 3a gezeigt ist. Hierzu wird auf dem Bildschirm 22a des Computers 22 ein von einer der Kameras 2a, 2b erfasstes Abbild 4' des Raumes 4 wiedergegeben. Zu erkennen ist, dass der Raum 4 als Abbild 4' auf dem Bildschirm 22a gezeigt ist. Ferner ist zu erkennen, dass über eine Menüleiste 28a unterschiedliche Funktionen aufrufbar sind. Die Menüleiste 28a ermöglicht die Auswahl verschiedener Sensoren 10a, 10b, 10c. Beispielsweise ist der Sensor 10a ein Taster, der Sensor 10b ein Dimmer und der Sensor 10c ein Temperaturregler. Mit Hilfe eines Mauszeigers 28b kann ein Nutzer einen der virtuellen Sensoren 10 anwählen und an einem Abbild 6a', 6b' der Wände 6a, 6b anordnen.

Dies ist in der Figur 3a durch die gestrichelten Linien dargestellt. Somit ist es möglich, eine Zuordnung zwischen einer Wand 6a, 6b und einem virtuellen Sensor 10 herzustellen. Der Nutzer kann mittels des Mauszeigers 28b den Sensor 10 beliebig in dem Abbild 4' verschieben und ihn somit an einer beliebigen Stelle innerhalb des Raumes 4 platzieren.

Anschließend kann der Benutzer beispielsweise einen Aufkleber an die Stelle des zuvor platzierten virtuellen Sensors 10 innerhalb des Raumes 4 kleben oder ein Gehäuse an der Wand 6b des Raumes 4 anordnen, um auf den virtuellen Sensor 10 an dieser Stelle hinzuweisen. Der Aufkleber kann beispielsweise so bedruckt sein, dass er die Funktion des virtuellen Sensors wiedergibt.

Nachdem über das in Figur 3a gezeigte Menü 28a verschiedene virtuelle Sensoren 10 an den Wänden 6 des Raumes 4 angeordnet wurden, muss den Sensoren 10 jeweils ein Aktor zugeordnet werden. Hierzu wird eine Menüsteuerung, wie in Figur 3b gezeigt, verwendet. In der Figur 3b ist in einer ersten Menüleiste 28c eine Auswahl von vorhandenen Aktoren 12a, 14a, 16a dargestellt. Der Nutzer kann mit dem Mauszeiger 28b einen Aktor 12a, 14a, 16a anwählen und ihn in einer Spalte 28e auf dem Bildschirm 22a anordnen.

In der entsprechenden Spalte 28e muss dann der diesem Aktor zugeordnete Sensor 10 ebenfalls mittels des Mauszeigers 28b angeordnet werden. Hierzu findet der Benutzer in der Menüleiste 28d eine Auswahl der bereits platzierten Sensoren 10 samt Beschreibung. Der Nutzer kann dann aus den Menüleisten 28c und 28d zum Einen die verfügbaren Aktoren 12a-16a sowie die bereits platzierten virtuellen Sensoren 10 auswählen und in jeweils einer Spalte 28e anordnen und einander zuordnen. Dadurch erstellt der Nutzer eine Verknüpfung zwischen einem Aktor 12a-16a und einem virtuellen Sensor 10. Darüber hinaus kann der Nutzer in einer Spalte 28e eine Aktion definieren, die bei Aktivierung des Sensors 10 durch den Aktor 12a, 14a, 16a durchgeführt werden soll.

Sowohl die Zuordnung eines Sensors 10 zu einer Wand 6b in dem Abbild 4' als auch die Zuordnung von Sensoren 10 zu Aktoren 12a-16a kann in der zentralen Steuereinrichtung 20 gespeichert werden. Auch ist es möglich, dass diese Zuordnungen in dem externen Server 26 gespeichert werden. Hierzu werden die entsprechenden Informationen von dem Computer 22 über den Bus 18 an die zentrale Steuereinrichtung 20 und ggf. weiter über das Internet 24 an den externen Server 26 geleitet.

Nachdem der Nutzer zum Einen die virtuellen Sensoren 10 in den Wänden 6 des Raumes 4 zugeordnet hat und zum Anderen den Sensoren 10 verschiedene Aktoren 12a-16a mit entsprechenden Aktionen, wie in Figur 3b dargestellt, zugeordnet hat, kann der Nutzer auch noch Gesten definieren, die einen Sensor 10 ansprechen. Hierzu kann der Benutzer beispielsweise in dem in Figur 3b gezeigten Menü 28c auf einen Sensor 10 klicken und eine Geste für diesen Sensor 10 auswählen. Hierzu kann beispielsweise eine Videosequenz von verschiedenen Gesten eingespielt werden, und der Nutzer kann anhand der Videosequenz erkennen, welche Geste er auswählen kann. Die auswählbaren Gesten können vordefiniert sein. Die auswählbaren Gesten können einem Sensor 10 z.B. per "Drag-And_drop", zugeordnet werden. Auch können einem Sensor 10 verschiedene Gesten zugeordnet werden, und jeder Geste kann eine andere Regel zugeordnet werden, nach der der zugeordnete Aktor 12a-16a agieren soll, wenn die Geste ausgeführt wird. Auch ist es möglich, dass der Nutzer in dem Raum 4 eine Geste durchführt und diese aufgenommene Geste dem Sensor 10 zuordnet. Hierfür kann der Benutzer beispielsweise eine weitere Menüleiste angezeigt bekommen, in der die von ihm durchgeführten Gesten dargestellt sind. Diese kann der Nutzer per "Drag-And-Drop" einem Sensor 10 zuordnen.

Mit Hilfe der Zuordnung von Gesten zu Sensoren 10, der Zuordnung von Sensoren 10 zu Wänden 6, als auch der Zuordnung von Sensoren 10 zu Aktoren 12a-16a sowie der Zuordnung von Gesten zu Regeln, ist die gesamte Steuerung der Einrichtungen 12-16 programmierbar.

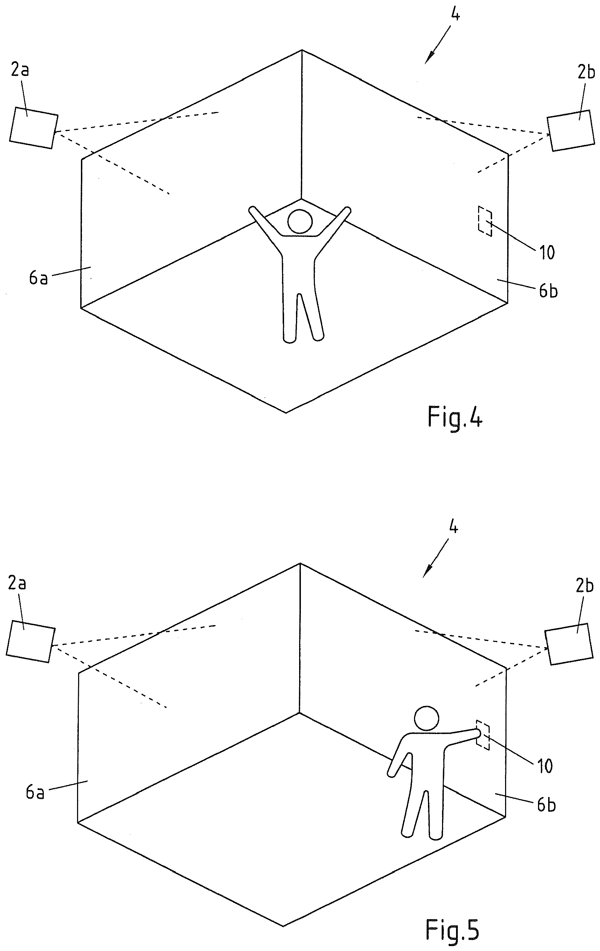

Mögliche Gesten sind in den Figuren 4 bis 6 dargestellt.

Eine erste Geste, wie sie in Figur 4 dargestellt ist, kann beispielsweise eine Aktivierungsgeste sein. Der Nutzer kann sich beispielsweise in den Raum 4 begeben und beide Arme nach oben strecken. Die so aufgenommene Videosequenz kann er anschließend an dem Computer 22 als Aktivierungsgeste definieren. Aus dieser Videosequenz der Aktivierungsgeste können biomechanische Informationen über Bewegungsabläufe entnommen und diese Informationen werden als die Geste charakterisierende Informationen in den Speichermitteln der zentralen Steuereinrichtung 20 gespeichert.

Anschließend kann der Nutzer die so gespeicherte Geste als Aktivierungsgeste definieren.

In Figur 5 ist beispielsweise dargestellt, dass der Benutzer mit seiner Hand auf den virtuellen Sensor 10 zeigt. Auch diese Geste wird durch eine der Kameras 2 aufgenommen. Anschließend kann der Benutzer an dem Computer 22 die so aufgenommene Videosequenz als den Sensor 10 ansprechende Geste definiert werden. Hierzu kann beispielsweise die entsprechende Videosequenz mit dem Mauszeiger 28b auf den entsprechenden Sensor 10 bewegt werden. Somit wird eine Zuordnung zwischen der den Sensor 10 ansprechenden Geste vorgenommen.

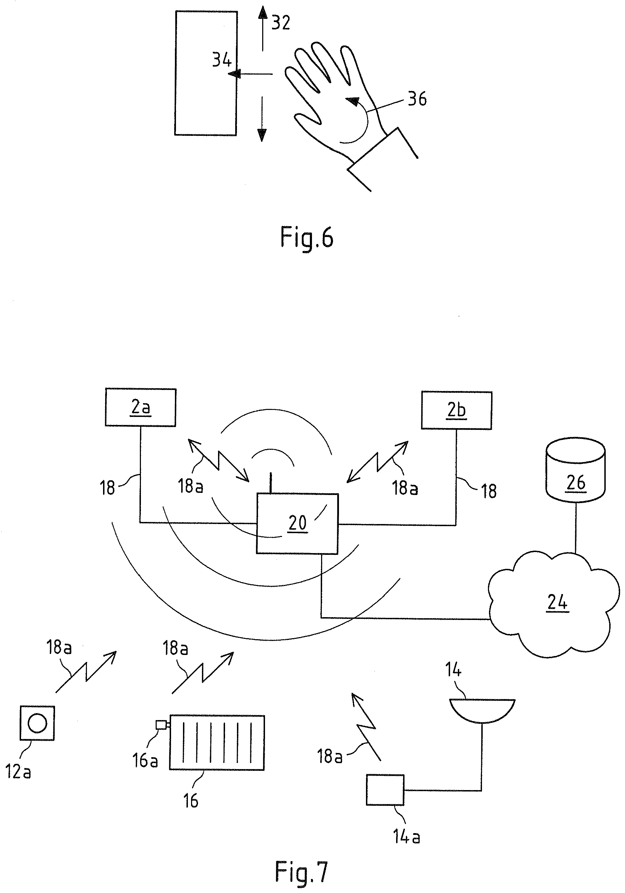

Figur 6 zeigt verschiedene Gesten, die ein Benutzer mit seiner Hand 30 ausführen kann. Vor dem Sensor 10 kann der Benutzer entweder Auf- und Abbewegungen 32, Tastbewegungen 34 als auch kreisende Bewegungen 36 durchführen. Jede dieser Gesten 32-36 kann durch den Benutzer selbst durchgeführt werden und durch eine der Kameras 2a, 2b aufgenommen werden. Die entsprechende Geste kann dann in dem Computer 22 einem Sensor 10 zugeordnet werden. Auch ist es möglich, dass die Gesten 32-36 vordefiniert sind und dass vordefinierte Videosequenzen in dem Computer 22 gespeichert bzw. abspielbar sind. Somit kann der Benutzer auch vordefinierte Gesten den Sensoren 10 zuordnen.

Nachdem der Benutzer Gesten definiert hat, die Gesten den entsprechenden Sensoren 10 zugeordnet hat und die Sensoren 10 in dem Raum 4 platziert hat, sowie die dem Sensor 10 zugeordneten Gesten mit Aktionen verknüpft hat, welche die dem Sensor 10 geordnete Aktoren 12a-16a durchführen sollen, kann der Benutzer sein Heimautomatisierungssystem mit Gesten steuern.

Hierzu erfassen die Kameras 2a, 2b wie in Figur 7a dargestellt, Bewegungen des Nutzers in dem Raum 4. Diese Bewegungen werden entweder drahtgebunden über den Bus 18 oder drahtlos über einen Funkbus 18a an die zentrale Steuereinrichtung 20 übermittelt. In der zentralen Steuereinrichtung 20 werden aus den aufgenommenen Bewegungen biomechanische Merkmale extrahiert und mit in der zentralen Steuereinrichtung 20 bzw. der Speichereinrichtung gespeicherten biomechanischen Merkmalen von Gesten verglichen. Sobald die zentrale Steuereinrichtung 20 eine Geste erkannt hat, wird in der zentralen Steuereinrichtung 20 überprüft, ob dieser Geste ein Sensor 10 zugeordnet ist. Diese Überprüfung kann auch in dem externen Server 26 erfolgen, wenn entweder die aufgenommenen Bewegungen von den Kameras 2 an den Server 26 übertragen werden oder lediglich die biomechanischen Merkmale von der zentralen Steuereinrichtung 20 an den externen Server 26. Auch ist es möglich, dass die in der zentralen Steuereinrichtung 20 erkannten Gesten über das Internet 24 an den zentralen Server 26 übertragen werden und in dem zentralen Server 26 nur überprüft wird, ob der erkannten Geste ein Sensor 10 zugeordnet ist.

Wird erkannt, dass eine Geste einem Sensor 10 zugeordnet ist, wird anschließend überprüft, welchem Aktor 12a-16a dieser Sensor 10 zugeordnet ist. Auch wird überprüft, welche Aktion des Aktors 12a-16a der entsprechenden Geste zugeordnet ist. Das heißt, eine Geste ist zum Einen einem Sensor 10 zugeordnet und zum Anderen einer bestimmten Aktion, die durchgeführt werden soll. Der Sensor 10 ist dann einem Aktor 12a-16a zugeordnet und entsprechend der durch die Geste definierten Aktion wird der Aktor 12a-16a angesteuert.

Ist beispielsweise eine Ein-/Ausschaltgeste wie beispielsweise Geste 34 erkannt worden und ist diese Geste 34 dem Sensor 10 zugeordnet, kann überprüft werden, welchem Aktor 12a-16a der Sensor 10 zugeordnet ist. Im vorliegenden Fall wäre dies der Aktor 12a. Wird die Geste 34 erkannt, wird ermittelt, dass der Aktor 12a dem Sensor 10 zugeordnet ist. Ferner ist definiert, dass die Geste 34 eine Ein-/Ausschaltgeste ist. Im Anschluss daran wird über den Funkbus 18a ein Steuersignal an den Aktor 12a übertragen, mit dem der Aktor 12a angewiesen wird, seinen Schaltzustand zu ändern, also ein- oder auszuschalten. Im Anschluss daran wird die Stehlampe 12 ein- oder ausgeschaltet. Das heißt, ein Nutzer kann mit Hilfe der Geste 34 an einem virtuellen Sensor 10 das Ein- und Ausschalten der Stehlampe 12 bewirken.

Auch ist es möglich, dass eine Drehbewegung als Geste 36 einem Sensor 10 zugeordnet ist. Ferner kann dann der Sensor 10 als Temperaturregler dem Steuerventil 16a zugeordnet sein. Bewegt der Benutzer seine Hand in der Geste 36 vor dem Sensor 10, würde dies dazu führen, dass das Steuerventil 16a angesprochen wird und die Soll-Temperatur verändert wird.

Auch ist es möglich, dass ein virtueller Sensor 10 an der Wand 6b im Bereich der Lampe 14 angeordnet ist. Dieser virtuelle Sensor 10 im Bereich der Lampe 14 kann beispielsweise dem Aktor 14a zugeordnet werden und darüber hinaus der Geste 34. Ferner kann definiert werden, dass die Geste 34 eine Ein-/Ausschaltgeste ist.

Zeigt der Benutzer dann mit der Geste 34 auf die Lampe 14 wird dies durch die Kameras 2 erkannt und die entsprechende Geste 34 ausgewertet. Anhand der ausgewählten Geste 34 wird erkannt, dass die Lampe 14 über den Aktor 14a ausgeschaltet werden muss. Der Aktor 14a ist vorzugsweise in einem Schaltschrank im Keller des Gebäudes, in dem der Raum 4 ist, angeordnet. Eine Zuleitung versorgt die Lampe 14 mit elektrischer Energie. Wird der Aktor 14a ein-/ausgeschaltet, führt dies zum Ein- oder Ausschalten der Lampe 14.

Mit Hilfe des gegenständlichen Verfahrens ist es möglich, virtuelle Sensoren 10 an Wänden 6 eines Raumes 4 anzuordnen und diesen Sensoren 10 zum Einen Gesten 32-36 zuzuordnen und zum Anderen Automatisierungsfunktionen. Hierzu werden Aktoren 12a-16a den virtuellen Sensoren 10 zugeordnet sowie durch die Aktoren 12a-16a durchzuführende Aktionen.

## Patentansprüche

1. Heimautomatisierungssteuerungssystem umfassend,
- Erfassungsmittel (2a, 2b) eingerichtet zum Erfassen von Gesten in einem Raum (4),
- Speichermittel eingerichtet zum Speichern von Zuordnungen zwischen einem virtuellen Sensor (10) in, an oder auf einer Raumbegrenzungsfläche (6) und einer den Sensor (10) ansprechenden Geste, und zum Speichern einer Zuordnung zwischen dem virtuellen Sensor (10) und einem Aktor (12a, 14a, 16a), und
- Steuerungsmittel (20) eingerichtet zum Ansteuern des Aktors (12a, 14a, 16a) bei einer Detektion der den Sensor ansprechenden Geste durch die Erfassungsmittel (2a, 2b),
**dadurch gekennzeichnet,**
- **dass** die Erfassungsmittel (2a, 2b) ein Abbild (4') zumindest von Teilen des Raums (4) erfassen,
- **dass** Wiedergabemittel (22a) das erfasste Abbild (4) des Raumes für einen Nutzer, vorzugsweise auf einem Bildschirm, wiedergeben, und
- **dass** mit Hilfe von Programmiermittel (22) in dem wiedergegebenen Abbild (4') des Raumes (4) der virtuelle Sensor (10) der Raumbegrenzungsfläche (6) zuordenbar ist.

2. Heimautomatisierungssteuerungssystem nach Anspruch 1, **dadurch gekennzeichnet, dass** die Erfassungsmittel (2a, 2b) eine Kamera, einen Infrarotsensor, einen Schallsensor und/oder einen Temperatursensor aufweisen.

3. Heimautomatisierungssteuerungssystem nach einem der vorangehenden Ansprüche, **dadurch gekennzeichnet, dass** die Raumbegrenzungsfläche (6) eine Wand, ein Boden oder eine Decke des Raums (4) ist.

4. Heimautomatisierungssteuerungssystem nach einem der Ansprüche 1 bis 3, **dadurch gekennzeichnet, dass** die Erfassungsmittel (2a, 2b) und/oder der Aktor (12a, 14a, 16a) Kommunikationsmittel zur Kommunikation über einen Heimautomatisierungsbus (18) aufweisen.

5. Heimautomatisierungssteuerungssystem nach einem der Ansprüche 1 bis 4, **dadurch gekennzeichnet, dass** ein erster lokaler zentraler Server (20) zumindest die Speichermittel und/oder die Steuerungsmittel aufweist und/oder dass ein zweiter externer zentraler Server (26) zumindest die Speichermittel aufweist.

6. Heimautomatisierungssteuerungssystem nach einem der Ansprüche 1 bis 5, **dadurch gekennzeichnet, dass** ein Gehäuse als Platzhalter für den virtuellen Sensor (10) vorgesehen ist, wobei das Gehäuse an der Raumbegrenzungsfläche (6) anbringbar ist.

7. Heimautomatisierungssteuerungssystem nach einem der Ansprüche 1 bis 6, **dadurch gekennzeichnet, dass** die Speichermittel eine Aktivierungsgeste speichern und dass erst nach einem Erfassen der Aktivierungsgeste die Steuerungsmittel (20) aktiviert sind.

8. Verfahren zum Steuern einer Einrichtung eines Heimautomatisierungssystem umfassend,
- Erfassen von Gesten in einem Raum,
- Speichern von Zuordnungen zwischen einem virtuellen Sensor (10) in, an oder auf einer äußeren Raumbegrenzung und einer den Sensor ansprechenden Geste, und Speichern einer Zuordnung zwischen dem virtuellen Sensor (10) und einem Aktor (12a, 14a, 16a), und
- Ansteuern des Aktors bei einer Detektion der den Sensor ansprechenden Geste,
**dadurch gekennzeichnet,**
- **dass** mit den Erfassungsmitteln (2a, 2b) ein Abbild (4') zumindest von Teilen des Raums (4) erfasst wird,
- **dass** mit Wiedergabemitteln (22a) das erfasste Abbild (4) des Raumes für einen Nutzer, vorzugsweise auf einem Bildschirm, wiedergeben wird, und
- **dass** mit Hilfe von Programmiermittel (22) in dem wiedergegebenen Abbild (4') des Raumes (4) der virtuelle Sensor (10) der Raumbegrenzungsfläche (6) zugeordnet wird.

## Claims

1. Home automation control system including,
- detection means (2a, 2b) arranged to obtain gestures within in a room (4),
- memory means arranged to store associations between a virtual sensor (10) in, on or within a room's boundary surface (6) and a gesture that is directed to the sensor (10), and to store associations between the virtual sensor (10) and an actuator (12a, 14a, 16a), and
- control means (20) arranged to trigger the actuator (12a, 14a, 16a) when detecting the gesture directed to the sensor via the detection means (2a, 2b),
**characterised in that:**
- the detection means (2a, 2b) obtain an image (4') of at least parts of the room (4),
- reproduction means (22a) reproduce the obtained image (4) of the room for a user, in particular on a screen, and
- the virtual sensor (10) can be assigned to the room's boundary surface (6) within the reproduced image (4') of the room (4) by means of programming means (22).

2. Home automation control system according to Claim 1, **characterised in that** the detection means (2a, 2b) have a camera, an infrared sensor, a sound sensor and/or a temperature sensor.

3. Home automation control system according to any one of the preceding claims, **characterised in that** the room's boundary surface (6) is a wall, floor or ceiling of the room (4).

4. Home automation control system according to any one of Claims 1 to 3, **characterised in that** the detection means (2a, 2b) and/or the actuator (12a, 14a, 16a) have communication means arranged to communicate for interaction via a home automation bus (18).

5. Home automation control system according to any one of Claims 1 to 4, **characterised in that** a first, local, centralised server (20) has at least the memory means and/or the control means and/or a second, external centralised server (26) has at least the memory means.

6. Home automation control system according to any one of Claims 1 to 5, **characterised in that** a casing is provided as placeholder for the virtual sensor (10), whereby the casing can be attached to the room's boundary surface (6).

7. Home automation control system according to any one of Claims 1 to 6, **characterised in that** the memory means stores an activation gesture and that the control means (20) is activated after the activation gesture is obtained.

8. Method for controlling a home automation control system device, comprising:
- obtaining gestures within a room
- storing associations between a virtual sensor (10) in, on or within an outer room boundary and a gesture that is directed to the sensor, and storing associations between the virtual sensor (10) and an actuator (12a, 14a, 16a), and
- triggering the actuator when detecting the gesture directed to the sensor,
**characterised in that**
- an image (4') of at least parts of the room (4), is obtained by the detection means (2a, 2b).
- the obtained image (4) of the room is reproduced for user, in particular on a screen, by the reproduction means (22a), and
- by means of programming means (22), the virtual sensor (10) is assigned to the room's boundary surface (6) within the reproduced image (4') of the room (4).

## Revendications

1. Système de commande d'automatisation domestique, qui comprend:
- des moyens de détection (2a, 2b), qui sont aménagés pour la détection de gestes dans une pièce (4),
- des moyens de mémorisation, qui sont aménagés pour la mémorisation d'associations entre un détecteur virtuel (10), dans, à ou sur une surface (6) qui limite la pièce, et un geste adressé au détecteur (10), et pour la mémorisation d'une association entre le détecteur virtuel (10) et un actionneur (12a, 14a, 16a), et
- des moyens de commande (20), qui sont aménagés pour la commande de l'actionneur (12a, 14a, 16a) quand un geste adressé au détecteur est détecté par les moyens de détection (2a, 2b),
**caractérisé en ce que**
- les moyens de détection (2a, 2b) saisissent au moins une vue (4') de parties de la pièce (4),
- des moyens de reproduction (22a) reproduisent, pour un utilisateur, de préférence sur un écran, l'image saisie de la pièce (4), et que
- à l'aide de moyens de programmation (22), dans la vue reproduite (4') de la pièce (4), le détecteur virtuel (10) peut être associé à la surface (6) qui limite la pièce.

2. Système de commande d'automatisation domestique selon la revendication 1,
**caractérisé en ce que** les moyens de détection (2a, 2b) sont dotés d'une caméra, d'un capteur infrarouge, d'une sonde acoustique et / ou d'un capteur de température.

3. Système de commande d'automatisation domestique selon l'une des revendications précédentes, **caractérisé en ce que** la surface (6) qui limite la pièce est un mur, un sol ou un plafond de la pièce (4).

4. Système de commande d'automatisation domestique selon l'une des revendications 1 à 3, **caractérisé en ce que** les moyens de détection (2a, 2b) et ou l'actionneur (12a, 14a, 16a) sont dotés de moyens de communication pour la communication par l'intermédiaire d'un bus d'automatisation domestique (18).

5. Système de commande d'automatisation domestique selon l'une des revendications 1 à 4, **caractérisé en ce qu'un** premier serveur central, local (20) est au moins dotés des moyens de mémorisation et / ou des moyens de commande, et / ou qu'un deuxième serveur central, externe (26) est au moins doté des moyens de mémorisation.

6. Système de commande d'automatisation domestique selon l'une des revendications 1 à 5, **caractérisé en ce que**, comme élément d'espacement, un boîtier est prévu pour le détecteur virtuel (10), sachant que le boîtier peut être monté sur la surface (6) qui limite la pièce.

7. Système de commande d'automatisation domestique selon l'une des revendications 1 à 6, **caractérisé en ce que** les moyens de mémorisation mémorisent un geste d'activation et que les éléments de commande (20) ne sont activés qu'après une détection du geste d'activation.

8. Procédé de commande d'un dispositif d'un système de commande d'automatisation domestique, qui comprend
- la détection de gestes dans une pièce,
- la mémorisation d'associations entre un détecteur virtuel (10), dans, à ou sur une limitation extérieure de la pièce, et un geste adressé au détecteur, et la mémorisation d'une association entre le détecteur virtuel (10) et un actionneur (12a, 14a, 16a), et
- la commande de l'actionneur lors de la détection d'un geste adressé au détecteur,
**caractérisé en ce que**
- les moyens de détection (2a, 2b) saisissent au moins une vue (4') de parties de la pièce (4),
- des moyens de reproduction (22a) reproduisent, pour un utilisateur, de préférence sur un écran, la vue saisie de la pièce (4), et que
- à l'aide de moyens de programmation (22), dans la vue reproduite (4') de la pièce (4), le détecteur virtuel (10) peut être associé à la surface (6) qui limite la pièce.
